# FASCICULE DE BREVET EUROPEEN

(11) **EP 2 694 601 B1**
(45) Date de publication et mention de la délivrance du brevet: **31.10.2018**
(21) Numéro de dépôt: 12717432.4
(22) Date de dépôt: 03.04.2012
(51) Int. Cl.: C23C 18/12, C09D 7/65, A47J 36/02, C09D 4/00, B05D 5/08, C09D 183/04

(54) **Revêtement sol-gel comportant une charge fluorée et article culinaire muni d'un tel revêtement**
SOL-GEL-ÜBERZUG MIT EINEM FLUORIERTEN FÜLLSTOFF UND NAHRUNGSMITTELPRODUKT MIT EINEM SOLCHEN ÜBERZUG
SOL-GEL COATING COMPRISING A FLUORINATED FILLER AND CULINARY ARTICLE EQUIPPED WITH SUCH A COATING

(30) Priorité: 08.04.2011 FR 1153094
(43) Date de publication de la demande: 12.02.2014
(73) Titulaire: SEB S.A., 69130 Ecully (FR)
(72) Inventeur: BERRUX, Aurélien, F-73290 La Motte Servolex (FR); BARCIKOWSKI, Gaëlle, F-73100 Aix Les Bains (FR)
(74) Mandataire: Regimbeau
(86) Numéro de dépôt international: PCT/FR2012/050715
(87) Numéro de publication internationale: WO 2012/136924

(56) Documents cités:
- WO-A1-2004/076570
- DE-A1- 10 159 288

## Description

La présente invention concerne de manière générale un revêtement sol-gel incorporant une charge fluorée, ainsi qu'un article culinaire muni d'un tel revêtement. La présente invention concerne également un procédé pour appliquer un tel revêtement sur un support.

Par revêtement sol-gel, on entend au sens de la présente invention un revêtement synthétisé par voie sol-gel à partir d'une solution à base de précurseurs en phase liquide, qui se transforme en un solide par un ensemble de réactions chimiques (hydrolyse et condensation) à basse température. Le revêtement ainsi obtenu peut être soit organo-minéral, soit entièrement minéral.

Par revêtement organo-minéral, on entend au sens de la présente invention, un revêtement dont le réseau est essentiellement inorganique, mais qui comporte des groupements organiques, notamment en raison de la nature des précurseurs utilisés et de la température de cuisson du revêtement.

Par revêtement entièrement minéral, on entend, au sens de la présente invention, un revêtement constitué d'un matériau entièrement inorganique, exempt de tout groupement organique. Un tel revêtement peut également être obtenu par voie sol-gel avec une température de cuisson d'au moins 400°C, ou à partir de précurseurs de type tétraéthoxysilane (TEOS) avec une température de cuisson qui peut être inférieure à 400°C.

Dans le domaine des revêtements sol-gel, on connaît notamment ceux obtenus à partir d'alcoxydes métalliques à base de silicium (silanes) ou ceux à base d'aluminium (aluminates). Ces revêtements ont actuellement un développement important dans le domaine des articles culinaires, et en particulier à titre de revêtements antiadhésifs recouvrant la surface interne de cuisson.

Outre une utilisation de ces revêtements à titre de revêtements antiadhésifs, les revêtements de type sol-gel peuvent également être utilisés pour recouvrir la surface extérieure d'articles culinaires. En effet, les revêtements sol-gel, et en particulier ceux développés par voie alcaline, présentent une dureté élevée, qui les rend particulièrement aptes à une utilisation comme revêtement extérieur d'articles culinaires.

Toutefois, cette dureté devient un inconvénient majeur lorsqu'on utilise des plaques de cuisson en vitrocéramique, car le frottement du revêtement sol-gel sur la plaque est alors un frottement de type verre sur verre, conduisant à l'apparition de rayures très préjudiciables non seulement à l'esthétique, mais aussi et surtout au bon fonctionnement de la plaque de cuisson.

En outre, les revêtements sol-gels présentent l'inconvénient d'être très sensibles au tachage, celui-ci étant causé par la diffusion des aliments dans la couche de revêtement sol gel du fait de sa porosité.

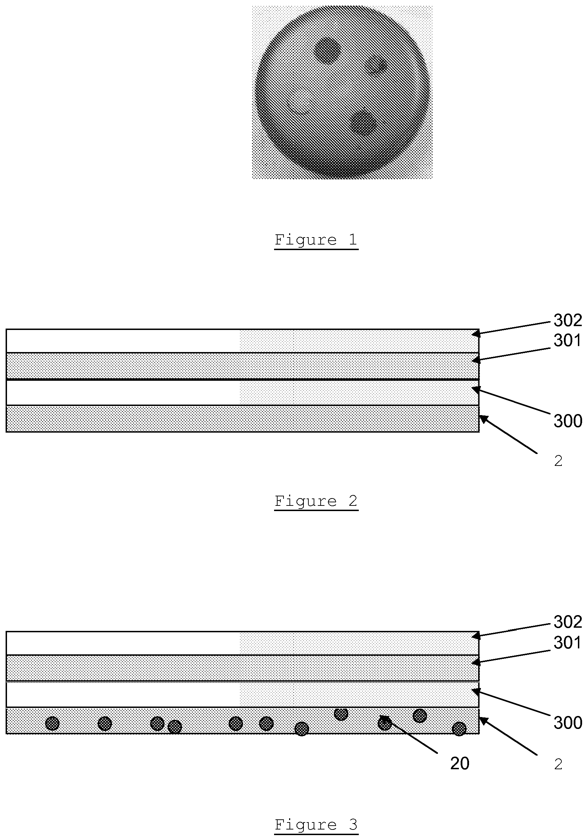

Par porosité du revêtement sol-gel, on entend, au sens de la présente invention tant la microporosité initiale du revêtement sol-gel, que la microporosité créée par les micro-rayures, qui aggravent le phénomène de tachage comme cela est illustré par la figure 1.

La présente invention a donc pour objectif de protéger un article culinaire en évitant ou au moins en réduisant l'apparition de rayures, tout en gardant un aspect décoratif essentiellement exempt de taches.

La demande internationale WO 2004/076570 A1 décrit un revêtement solgel basé sur un précurseur de sol-gel comprenant des particules de polymère fluoré, tel que le polytétrafluoroéthylène, stabilisées avec un copolymère de polysiloxane-polyoxyalkylène. La stabilisation des particules fluorées permet une meilleure répartition des particules dans le revêtement et permet ainsi d'obtenir des revêtements antiadhésifs résistant aux rayures. La demande DE 101 59 288 A1, décrit un revêtement sol-gel comprenant une matrice formée à partir d'un polyalcoxylate métallique et une charge de particules de résine fluorée. Ces revêtements permettent d'obtenir des surfaces résistantes à la chaleur, aux produits chimiques et aux rayures et ils peuvent être appliqués sur des articles culinaires.

Une solution connue pour limiter, voire pour éviter l'apparition de taches dans un revêtement sol-gel consiste à introduire des silanes fluorés. Ainsi, la demande de brevet américain US 2008/0213601 décrit un revêtement sol-gel, qui comporte une fluororésine modifiée par un silane par ionisation.

Or, outre le cout élevé de tels composés, il est connu de l'homme de l'art que ces composés doivent, pour être efficaces, comporter une chaine perfluorée suffisamment longue pour conférer des propriétés antitaches au revêtement. En général, la chaine perfluorée comporte plus de six atomes de carbone, ce qui fait qu'en cas de dégradation, elle est susceptible de se retrouver dans l'environnement, et ce, pendant une durée assez longue. Par ailleurs, l'utilisation d'un silane fluoré diminue la dureté du sol-gel final, ce qui dans la pratique limite sa tenue à l'abrasion sans apporter d'effet lubrifiant. De plus, le silane fluoré n'apporte aucun effet lubrifiant contrairement à la cire de PTFE.

L'introduction de PTFE sous forme de poudre dans un revêtement sol-gel est une autre possibilité pour diminuer la sensibilité aux taches. Toutefois, il est extrêmement difficile de mouiller la poudre de PTFE, ce qui rend son incorporation dans une composition sol-gel quasiment impossible.

Pour remédier à ces problèmes d'apparition de rayures et de taches dans un revêtement sol-gel, la demanderesse a mis au point un revêtement sol-gel comportant une charge fluorée sous forme de particules de résine fluorocarbonée (notamment de PTFE enrobées par une cire de polyéthylène ou par un polyéther fluoré). L'ajout de cette charge fluorée permet non seulement d'améliorer la résistance au tachage, mais aussi d'une manière surprenante, la dureté du revêtement sol-gel. Les articles ainsi revêtus présentent une meilleure sensibilité à la glisse, ce qui permet de réduire le frottement et le risque d'endommagement du fond de l'article lors de son contact avec des plaques à induction ou vitrocéramiques. Par ailleurs, les particules de PTFE sont enrobées par un polymère de masse moléculaire élevée (cire de polyéthylène ou polyéther fluoré), qui n'est pas susceptible de se dégrader et donc de s'accumuler dans l'environnement.

Plus particulièrement, la présente invention a pour objet un revêtement sol-gel se présentant sous forme d'un film continu d'un matériau comprenant une matrice formée à partir d'au moins un polyalcoxylate métallique, caractérisé en ce qu'il comporte au moins une charge fluorée sous forme de particules de résine fluorocarbonée enrobées par une cire de polyéthylène et/ou par un polyéther fluoré.

Avantageusement, le revêtement sol-gel selon l'invention présente une épaisseur d'au moins 1 µm, et de préférence comprise entre 1 et 50 µm. Au-dessous de 1 mm, la dureté du revêtement est moindre et au-dessus de 50 mm, on observe un accroissement de la porosité.

Les particules de charge fluorée selon la présente invention ont la particularité de facilement se disperser dans un milieu hydro-alcoolique contrairement à une poudre de PTFE classique (comme celles commercialisée sous la dénomination commerciale Dyneon 9207® par la société 3M). Elles améliorent le glissant de la surface, améliore la résistance à la rayure et ont un effet perlant et lipophobe d'où des performances de nettoyage optimisées.

A titre de résines fluorocarbonées utilisables dans les particules de charge fluorée selon l'invention, on peut notamment citer le polytétrafluoroéthylène (PTFE), le copolymère de tétrafluoroéthylène et de perfluoropropylvinyléther (PFA), et le copolymère de tétrafluoroéthylène et d'hexafluoropropène (FEP), le polyfluorure de vinylidène (PVDF), le MVA (copolymère de TFE/PMVE), le terpolymère TFE/PMVE/FAVE, l'ETFE et leurs mélanges.

La résine flurocarbonée préférée utilisée dans les particules de charge fluorée selon l'invention est le polytétrafluoroéthylène (PTFE).

Avantageusement, la matrice du revêtement sol-gel selon l'invention est formée à partir d'un polyalcoxylate métallique choisi parmi les polyalcoxysilanes, les aluminates, les zirconates, les matrices mixtes de polyalcoxysilane et d'aluminate, et les matrices mixtes de polyalcoxysilane et de zirconate.

Avantageusement, le matériau sol-gel du revêtement selon l'invention comprend en outre au moins une charge pigmentaire et/ou renforçante, qui est de préférence de taille micrométrique ou submicronique, de préférence comprise entre 0,1 et 50 µm afin de ne pas dépasser de la surface du revêtement sol gel au risque d'avoir une surface abrasive.

A titre de charges pigmentaires utilisables selon l'invention, on peut notamment citer le mica enrobé ou non, le dioxyde de titane, les oxydes mixtes de cuivre-chrome-manganèse (spinelles), les aluminosilicates, les oxydes de fer, le noir de carbone, le rouge de pyralène, les paillettes métalliques, les pigments interférentiels, les pigments thermochromes, les pigments magnétiques ou magnétisables.

A titre de charges renforçantes utilisables selon l'invention, on peut notamment citer l'alumine, la zircone, et la silice.

La présente invention concerne également un article culinaire comprenant un support dont l'une au moins des faces principales est revêtue d'un revêtement selon l'invention.

Plus particulièrement, la présente invention a pour objet un article culinaire comprenant un support présentant une face intérieure pouvant recevoir des aliments et une face extérieure destinée à être disposée vers la source de chaleur, caractérisé en ce que l'une au moins desdites faces intérieure et extérieure est revêtue d'un revêtement sol-gel selon l'invention à titre de revêtement décoratif et/ou de protection.

De préférence, la face extérieure dudit article est revêtue du revêtement sol-gel selon l'invention.

Le support est avantageusement réalisé en un matériau choisi parmi les métaux, le verre, les céramiques et les matières plastiques.

Selon un premier mode de réalisation avantageux de la présente invention, le support est un support monocouche en aluminium ou en alliage d'aluminium, en fonte d'aluminium, en acier inoxydable, en fonte d'acier ou en cuivre.

Selon un deuxième mode de réalisation avantageux de la présente invention, le support ou un support multicouches comprenant de l'extérieur vers l'intérieur les couches suivantes acier inoxydable ferritique/aluminium/acier inoxydable austénitique ou encore acier inoxydable/aluminium/cuivre/aluminium/acier inoxydable austénitique, ou encore un support en aluminium de fonderie, ou un support en aluminium ou alliages d'aluminium doublé d'un fond extérieur en acier inoxydable.

La présente invention a encore pour objet un procédé pour appliquer sur l'une des faces d'un support au moins un revêtement tel que défini selon l'invention, caractérisé en ce qu'il comporte :
a) une étape de fourniture d'un support présentant au moins deux faces principales opposées ;
b) une étape de préparation d'une composition aqueuse comprenant au moins un précurseur sol-gel de type alcoxyde métallique ;
c) une étape d'hydrolyse dudit précurseur sol-gel par introduction d'eau et d'un catalyseur acide ou basique, suivie d'une réaction de condensation engendrant la formation d'un alcool pour obtenir une composition sol-gel ;
d) une étape d'ajout à ladite composition sol-gel d'au moins un solvant organique léger à titre de diluant et d'au moins un solvant organique lourd à titre d'agent mouillant ;
e) une étape d'ajout à ladite composition sol-gel modifiée d'au moins charge fluorée sous forme de particules de résine fluorocarbonée enrobées par une cire de polyéthylène ou un polyéther fluoré, pour obtenir une composition sol-gel modifiée et fluorée ;
f) application sur l'une des faces du support d'au moins une couche de la composition sol-gel modifiée et fluorée, dont l'épaisseur est de préférence comprise entre 1 et 50 µm à l'état humide ; puis
g) cuisson de ladite couche à une température comprise entre 200°C et 420°C.

On utilise de préférence à titre de précurseur un alcoxyde métallique choisi dans le groupe constitué par :
- les précurseurs répondant à la formule générale M₁(OR₁)ₙ,
- les précurseurs répondant à la formule générale M₂(OR₂)₍ₙ₋₁₎R₂', et
- les précurseurs répondant à la formule générale M₃(OR₃)₍ₙ₋₂₎R₃'₂, avec :
   R₁, R₂, R₃ ou R₃' désignant un groupement alkyle,
   R₂' désignant un groupement alkyle ou phényle,
   n étant un nombre entier correspondant à la valence maximale des métaux M₁, M₂ ou M₃,
   M₁ M₂ ou M₃ désignant un métal choisi parmi Si, Zr, Ti, Sn, Al, Ce, V, Nb, Hf, Mg ou Ln,

Avantageusement, l'alcoxyde métallique de la composition sol-gel est un alcoxysilane.

A titre d'alcoxysilanes utilisables dans la solution composition sol-gel du procédé de l'invention, on peut notamment citer le méthyltriméthoxysilane (MTMS), le tétraéthoxysilane (TEOS), le méthyltriéthoxysilane (MTES), le diméthyldiméthoxysilane, et leurs mélanges.

De manière préférée, on utilisera les alcoxysilanes MTES et TEOS, car ils présentent l'avantage de ne pas contenir de groupements méthoxy. En effet l'hydrolyse des méthoxy conduit à la formation de méthanol dans la formulation sol-gel, ce qui compte tenu de son classement toxique nécessite des précautions supplémentaires lors de l'application. A contrario l'hydrolyse des groupements éthoxy ne génère que de l'éthanol possédant un classement plus favorable et donc des prescriptions d'utilisations moins contraignantes pour le revêtement sol-gel.

En ce qui concerne l'étape e) d'ajout à la composition sol-gel de solvants organiques spécifiques (léger à titre de diluant et lourd à titre d'agent mouillant), ceux-ci ont un effet bénéfique pour une application par pulvérisation (co-solvant pour projection/séchage et nappage), mais aussi pour chélater la réaction de condensation.

Par solvant organique léger, on entend, au sens de la présente invention, un solvant dont le point d'ébullition est égal ou inférieur à 110°C.

A titre de solvants organiques légers utilisables dans le procédé selon l'invention, on peut notamment citer le méthanol et l'isopropanol.

Par solvant organique lourd, on entend, au sens de la présente invention, un solvant dont le point d'ébullition est supérieur à 160°C.

A titre de solvants organiques lourds utilisables dans le procédé selon l'invention, on peut notamment citer les glycols et leurs dérivés (par exemple le butylglycol et l'éthylène- glycol-butyl-éther ou EGBE), le terpinéol, et le texanol (nom chimique : monoisobutyrate de 2,2,4-triméthylpentane-1,3-diol).

La charge fluorée et le support utilisés dans le procédé selon l'invention sont tels que définis précédemment.

Par exemple, le support présente avantageusement la forme finale de l'article culinaire, avec une face intérieure apte à recevoir des aliments et une face extérieure destinée à être disposée du côté d'une source de chaleur.

Avantageusement, l'étape e) d'ajout de la charge fluorée à la composition sol-gel modifiée obtenue à l'issue de l'étape d) est réalisée par broyage ou par dispersion.

Par broyage, on entend, au sens de la présente invention, le mélange de l'additif avec le liant dans un broyeur à bille. L'intérêt d'un tel procédé est de lier intimement le liant sol gel à son additif fluoré par l'énergie produite par le frottement des billes du broyeur.

Par dispersion, on entend, au sens de la présente invention, le mélange de l'additif avec le liant en phase aqueuse.

Avantageusement, l'application de la composition sol-gel modifiée et fluorée sur l'une des faces principales du support est réalisée par pulvérisation, que ce soit en mono- ou en multicouches (notamment par application humide sur humide, ou sur biscuit (couche séchée et couche cuite). Mais, l'application peut également être réalisée par sérigraphie.

Enfin, en ce qui concerne l'étape g) de cuisson, la température de cuisson est comprise entre 200°C et 420°C. Cette température de cuisson doit rester égale ou inférieure à 420°C pour ne pas dénaturer et/ou décomposer charge fluorée.

De préférence, le procédé selon l'invention comporte en outre une étape d'ajout d'au moins une charge pigmentaire qui est réalisée simultanément à l'ajout de ladite charge fluorée.

D'autres avantages et particularités de la présente invention résulteront de la description qui va suivre, donnée à titre d'exemple non limitatif et faite en référence aux figures annexées :
- la figure 1 représente un revêtement sol-gel de l'art antérieur taché conformément au test FAN selon la norme NF 92-032 ;
- la figure 2 représente une vue schématique en coupe d'une portion d'article culinaire comportant un support dont l'une des faces principales (face extérieure) est revêtue d'un revêtement sol-gel, cet article étant conforme à l'art antérieur dans la mesure où ce revêtement est exempt de charge fluorée,

- la figure 3 représente une vue schématique en coupe d'une portion d'article culinaire comportant un support dont l'une des faces principales (face extérieure) est aussi revêtue d'un revêtement sol-gel, cet article étant conforme à l'invention dans la mesure où ce revêtement comporte au moins charge fluorée sous forme de particules de résine fluorocarbonée enrobées par une cire de polyéthylène,
- la figure 4 représente les résultats comparatifs obtenus au test anti-rayure pour un revêtement sol-gel de l'art antérieur (sans charge fluorée) et deux revêtements sol-gel selon l'invention (avec charge fluorée),
- la figure 5 représente les résultats comparatifs obtenus au test d'hydrophobicité pour un revêtement sol-gel de l'art antérieur (sans charge fluorée) et deux revêtements sol-gel selon l'invention (avec charge fluorée),

La figure 1 a été commentée dans la partie introductive de la présente demande.

Les éléments identiques représentés sur les figures 2 et 3 sont identifiés par des références numériques identiques.

Sur ces figures, on a représenté uniquement la portion du support 3 de l'article, dont la face extérieure est revêtue d'une couche de revêtement sol-gel. Il s'agit en particulier d'un support multicouche comprenant de l'extérieur vers l'intérieur une couche en acier inoxydable ferritique/une couche en aluminium/une couche en acier inoxydable austénitique, la face extérieure du support 3 en acier inoxydable ferritique 300 étant revêtue d'un revêtement 2 sol-gel.

Dans le mode de réalisation conforme à la présente invention illustré par la figure 3, le revêtement sol-gel comprend au moins une charge fluorée sous forme de particules 20 de résine fluorocarbonée enrobées par une cire de polyéthylène, ces particules pouvant notamment se présenter sou forme de billes sphériques, de plaquettes, ou d'agglomérats (usuellement désignés en anglais par le terme « clusters »).

Dans le mode de réalisation conforme l'art antérieur illustré par la figure 1, le revêtement sol-gel en est exempt.

L'invention est illustrée plus en détail dans les exemples suivants.

Dans ces exemples, sauf indication contraire, tous les pourcentages et parties sont exprimés en pourcentages massiques.

### EXEMPLES

### Produits

### Supports

- supports multicouche 3 comportant
   ▪ une première couche (constituant la face extérieure) en acier inoxydable 300, dont l'épaisseur varie de 0,1 à 2 mm,
   ▪ une deuxième couche intermédiaire 301 en aluminium 4006, dont l'épaisseur varie de 1 à 4 mm, et
   ▪ une troisième couche intérieure (constituant la face intérieure) en acier inoxydable 316, dont l'épaisseur varie de 0,1 à 2 mm également.

### Charges et pigments

- charge pigmentaire sous forme de mica avec un enrobage d'oxyde de fer III commercialisée sous la dénomination commerciale Iriodin® 4504 Lava Red par la société MERCK,
- charge fluorée sous forme de particules micronisées de PTFE enrobées de cire de polyéthylène, commercialisée sous la dénomination commerciale BYK CERAFLOUR 998® par la société BYK-Chemie.

### Solvants

- solvant léger : isopropanol,
- solvant lourd : butylglycol,

### Tests

### Evaluation de la résistance à la rayure (usuellement désigné par les termes anglais « scratch test »).

On évalue la résistance à la rayure en appliquant sur le support revêtu une force via un indenteur en diamant dont la hauteur est de 50 µm et on mesure la force nécessaire (en N) pour obtenir une délamination du revêtement .

### Evaluation de la mouillabilité (ou hydrophobicité du revêtement).

On mesure de l'angle de contact d'une goutte d'eau sur le revêtement avec un goniomètre de type Digidrop de GBX.

### EXEMPLE 1 : revêtement sol-gel avec charge fluorée

On applique par pulvérisation, sur la face extérieure du support multicouche préalablement dégraissée et sablée, une composition sol-gel 2, dont les différents constituants avec leurs quantités respectives sont indiqués dans le tableau 1 ci-dessous. On obtient une couche de revêtement sol-gel non cuite 2.

**Tableau 1 : Composition chimique de la composition sol-gel 2**

| **Composants** | **Pourcentage massique(%)** |
|---|---|
| Composition sol gel « filtrée » | 30 à 50% |
| Isopropanol (diluant) | 30 à 50% |
| Butylglycol (agent mouillant) | 0 à 10% |
| Charge pigmentaire | 0 à 10% |
| Charge fluorée | ≤ à 10% |

La composition sol-gel « filtrée » est obtenue comme suit :
∘ on part d'une composition sol-gel initiale à base d'un précurseur de type alcoxyde métallique tel que défini précédemment (de préférence le MTES et le TEOS);
∘ cet alcoxyde métallique est ensuite hydrolysé dans un réacteur en présence d'eau et d'un catalyseur acide ou basique (de préférence un hydroxyde de métaux alcalins ou alcalino-terreux) et il y a formation d'alcool par une réaction de condensation ;
∘ une filtration de la composition sol-gel ainsi obtenue peut être nécessaire si des grains ont été formés (par exemple génération d'agglomérats formés in situ lors de l'hydrolyse condensation des précurseurs alcoxydes métalliques, notamment si elle réalisée par voie alcaline) lors de la réaction d'hydrolyse condensation ;
∘ on ajoute à la composition sol-gel filtrée l'isopropanol à titre de diluant et du butylglycol à titre d'agent mouillant afin d'éviter un autoséchage lors des phases de pulvérisation, mais aussi pour faciliter le mouillage du revêtement sur les substrats métalliques ; on obtient une composition sol-gel modifiée ;
∘ dans une dernière étape, on ajoute les charges pigmentaire et fluorée.

On procède de préférence, préalablement à l'étape de cuisson, à une étape de séchage (ou pré-séchage) par infrarouge pendant une durée de l'ordre de quelque secondes ; cette étape de pré-séchage n'est pas indispensable car on observe un auto-séchage du revêtement sol-gel une fois appliqués, mais cette étape est préférable dans la mesure où elle permet d'éviter une pollution de surface par de la poussière notamment.

Puis, on procède à l'étape de cuisson dans un four à convection classique en atmosphère inerte ou oxydante, pendant une durée allant de 30 à 350 minutes et une température comprise entre 200°C et 420°C (température maximale de 420°C afin d'éviter la dégradation du PTFE) conduisent à la solidification complète du revêtement sol-gel 2.

Le support revêtu de la couche sol-gel 2 ainsi obtenu correspond à celui illustré sur la figure 3.

Une variante possible peut consister à ne pas mettre de charge pigmentaire dans la composition sol-gel, de sorte que le revêtement sol-gel ainsi obtenu est un vernis incolore, qui, outre l'effet anti-rayure, présente un effet anti-empreinte («*finger-print*» en anglais) et facilite le nettoyage, notamment sur une surface en acier inoxydable. Une cuisson en four en atmosphère inerte ou contrôlée est alors nécessaire afin d'éviter la formation d'oxyde de chrome à l'interface métal-sol gel.

### EXEMPLE 2 comparatif : revêtement sol-gel exempt de charge fluorée

De même qu'à l'exemple 1, on applique par pulvérisation, sur la face extérieure du support multicouche préalablement dégraissée et sablée, une composition sol-gel 2' qui se différencie de la composition sol-gel 2 de l'exemple 1 (détaillée dans le tableau 1) uniquement par l'absence de charge fluorée. La composition 2 est détaillée dans le tableau 2 ci-dessous :

**Tableau 2 : Composition chimique de la composition sol-gel 2'**

| **Composants** | **Pourcentage massique(%)** |
|---|---|
| Composition sol gel « filtrée » | 30 à 50% |
| solvant léger pour dilution | 30 à 50% |
| solvant lourd | 0 à 10% |
| Charge pigmentaire | 0 à 10% |

La composition sol-gel « filtrée » est obtenue de la même manière qu'à l'exemple 1.

Après l'application de la composition sol-gel 2', une étape de séchage par infrarouge pendant une durée de l'ordre de quelque secondes, suivie d'une étape de cuisson dans un four à convection classique en atmosphère inerte ou oxydante, pendant une durée allant de 30 à 350 minutes et une température comprise entre 200°C et 420°C (température maximale de 420°C afin d'éviter la dégradation du PTFE) conduisent à la solidification complète du revêtement sol-gel 2.

Le support revêtu de la couche sol-gel 2 ainsi obtenu correspond à celui illustré sur la figure 2.

### EXEMPLE 3 : résultats des tests anti-rayure et d'hydrophobicité/mouillabilité

Les supports revêtus des exemples 1 et 2 (respectivement illustrés sur les figures 2 et 3) sont soumis aux tests d'hydrophobicité et anti-rayure précédemment indiqués dans la présente demande.

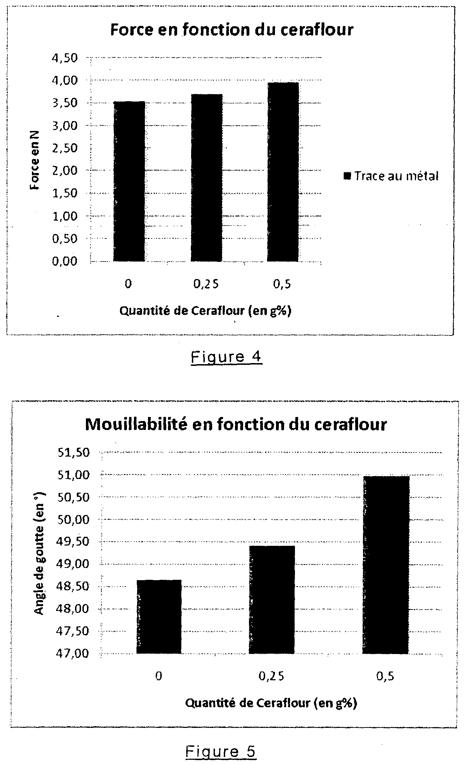

Les résultats obtenus à l'issue de ces différents tests sont illustrés par les figures 3 et 4.

Ces figures montrent que la présence de la charge fluorée dans le revêtement sol-gel permet d'améliorer de manière significative les performances physico-chimiques du revêtement sol-gel en termes d'hydrophobicité et de performances antirayures.

En particulier, les résultats obtenus au test d'hydrophobicité montrent un changement de comportement dans le revêtement sol-gel lié à la présence d'une charge fluorée conforme à la présente invention. En effet, lorsqu'il n'y a pas de charge fluorée, l'angle de contact mesuré est de 48,6°, alors que la présence croissante de CERAFLOUR dans le revêtement conduit à une augmentation significative de l'angle de contact : celui-ci est de l'ordre de 49,4° pour 0,25 % massique de CERAFLOUR dans le revêtement et de l'ordre de 51° pour 0,5 % massique de CERAFLOUR.

Par ailleurs, les résultats obtenus au test anti-rayure montrent également un changement de comportement dans le revêtement sol-gel lié à la présence d'une charge fluorée conforme à la présente invention. En effet, lorsqu'il n'y a pas de charge fluorée, la force nécessaire pour une délamination du revêtement est de 3,5 N, et de l'ordre de 3,9 N pour 0,5 % massique de CERAFLOUR.

## Revendications

1. Revêtement (2) sol-gel se présentant sous forme d'un film continu d'un matériau comprenant une matrice formée à partir d'au moins un polyalcoxylate métallique, **caractérisé en ce qu'**il comporte au moins une charge fluorée sous forme de particules de résine fluorocarbonée enrobées par une cire de polyéthylène ou un polyéther fluoré.

2. Revêtement (2) selon la revendication 1, **caractérisé en ce que** la résine fluorocarbonée est le polytétrafluoroéthylène (PTFE).

3. Revêtement (2) selon la revendication 1 ou 2, **caractérisé en ce que** le polyalcoxylate métallique est un polyalcoxysilane.

4. Revêtement (2) selon l'une quelconque des revendications 1 à 3, **caractérisé en ce que** le matériau sol-gel comprend en outre au moins une charge pigmentaire et/ou renforçante.

5. Revêtement (2) selon la revendication 4, **caractérisé en ce que** ladite charge pigmentaire et/ou renforçante présente une taille micrométrique ou submicronique.

6. Revêtement (2) selon la revendication 4 ou 5, **caractérisé en ce que** la charge pigmentaire est choisie parmi le mica enrobé ou non, le dioxyde de titane, les oxydes mixtes de cuivre-chrome-manganèse (spinelles), les aluminosilicates, les oxydes de fer, le noir de carbone, le rouge de pyralène, les paillettes métalliques, les pigments interférentiels, les pigments thermochromes, les pigments magnétiques ou magnétisables.

7. Revêtement (2) selon la revendication 4 ou 5, **caractérisé en ce que** la ou les charges renforçantes sont choisies parmi l'alumine, la zircone, et la silice.

8. Article culinaire (1) comprenant un support (3) présentant une face intérieure (31) pouvant recevoir des aliments et une face extérieure (32) destinée à être disposée vers la source de chaleur, **caractérisé en ce que** l'une au moins desdites faces intérieure (31) et extérieure (32) est revêtue d'un revêtement (2) décoratif et/ou de protection qui est tel que défini selon l'une quelconque des revendications 1 à 7.

9. Article (1) selon la revendication 8, **caractérisé en ce que** ladite face extérieure (32) est revêtue dudit revêtement (2) décoratif et/ou de protection.

10. Article (1) selon la revendication 8 ou 9, **caractérisé en ce que** le support (3) est en un matériau choisi parmi les métaux, le verre, les céramiques et les matières plastiques.

11. Article culinaire (1) selon la revendication 10, **caractérisé en ce que** le support (3) est un support monocouche en aluminium ou en alliage d'aluminium, en fonte d'aluminium, en acier inoxydable, en fonte d'acier ou en cuivre, ou un support multicouches comprenant de l'extérieur vers l'intérieur les couches suivantes acier inoxydable ferritique/aluminium/acier inoxydable austénitique ou encore acier inoxydable/aluminium/cuivre/aluminium/acier inoxydable austénitique, ou encore une calotte d'aluminium de fonderie, d'aluminium ou d'alliages d'aluminium doublée d'un fond extérieur en acier inoxydable.

12. Procédé pour appliquer sur l'une des faces d'un support au moins un revêtement tel que défini selon l'une quelconque des revendications 1 à 7, **caractérisé en ce qu'**il comporte les étapes suivantes :
a) une étape de fourniture d'un support (3) présentant au moins deux faces opposées (31, 32) ;
b) une étape de préparation d'une composition aqueuse comprenant au moins un précurseur sol-gel de type alcoxyde métallique ;
c) une étape d'hydrolyse dudit précurseur sol-gel par introduction d'eau et d'un catalyseur acide ou basique, suivie d'une réaction de condensation engendrant la formation d'un alcool pour obtenir une composition sol-gel ;
d) une étape d'ajout à ladite composition sol-gel d'au moins un solvant organique léger à titre de diluant et d'au moins un solvant organique lourd à titre d'agent mouillant, pour obtenir une composition sol-gel modifiée ;
e) une étape d'ajout à ladite composition sol-gel modifiée d'au moins une charge fluorée sous forme de particules de résine fluorocarbonée enrobées d'une cire de polyéthylène ou d'un polyéther fluoré, pour obtenir une composition sol-gel modifiée et fluorée ;
f) application sur l'une des faces (31, 32) du support (3) d'au moins une couche de la composition sol-gel modifiée et fluorée ; puis
g) cuisson de ladite couche à une température comprise entre 200°C et 420°C.

13. Procédé selon la revendication 12, **caractérisé en ce que** l'étape e) d'ajout de la charge fluorée est réalisée par broyage ou par dispersion.

14. Procédé selon la revendication 12 ou 13, **caractérisé en ce que** l'application de la composition sol-gel modifiée et fluorée est réalisée par pulvérisation.

15. Procédé selon l'une quelconque des revendications 12 à 14, **caractérisé en ce qu'**il comporte en outre une étape d'ajout d'au moins une charge pigmentaire qui est réalisée simultanément à l'ajout de ladite charge fluorée.

16. Procédé selon l'une quelconque des revendications 12 à 15, **caractérisé en ce que** le support (3) présente la forme finale de l'article culinaire, comportant une face intérieure (31) apte à recevoir des aliments et une face extérieure (32) destinée à être disposée du côté d'une source de chaleur.

## Patentansprüche

1. Sol-Gel-Beschichtung (2), die sich in Form eines durchgängigen Films aus einem Material präsentiert, das eine aus mindestens einem metallischen Polyalkoxylat gebildete Matrix umfasst, **dadurch gekennzeichnet, dass** sie mindestens einen fluorierten Füllstoff in Form von Fluorkohlenstoffharz-Teilchen umfasst, die mit einem Polyethylenwachs oder einem fluorierten Polyether überzogen sind.

2. Beschichtung (2) nach Anspruch 1, **dadurch gekennzeichnet, dass** das Fluorkohlenstoffharz Polytetrafluorethylen (PTFE) ist.

3. Beschichtung (2) nach Anspruch 1 oder 2, **dadurch gekennzeichnet, dass** das metallische Polyalkoxylat ein Polyalkoxysilan ist.

4. Beschichtung (2) nach einem der Ansprüche 1 bis 3, **dadurch gekennzeichnet, dass** das Sol-Gel-Material weiter mindestens einen pigmentären und/oder verstärkenden Füllstoff umfasst.

5. Beschichtung (2) nach Anspruch 4, **dadurch gekennzeichnet, dass** der pigmentäre und/oder verstärkende Füllstoff eine Größe im Mikrometer- oder Submikronbereich aufweist.

6. Beschichtung (2) nach Anspruch 4 oder 5, **dadurch gekennzeichnet, dass** der pigmentäre Füllstoff ausgewählt ist aus Glimmer, überzogen oder nicht, Titandioxid, Kupfer-Chrom-Mangan-Mischoxiden (Spinellen), Aluminosilikaten, Eisenoxiden, Ruß, Pyralin-Rot, Metallflitter, Interferenzpigmenten, thermochromen Pigmenten, magnetischen oder magnetisierbaren Pigmenten.

7. Beschichtung (2) nach Anspruch 4 oder 5, **dadurch gekennzeichnet, dass** der oder die verstärkenden Füllstoffe ausgewählt sind aus Aluminiumoxid, Zirkonoxid und Siliziumdioxid.

8. Kochartikel (1), umfassend einen Träger (3), der eine Innenfläche (31) aufweist, welche Lebensmittel aufnehmen kann, und eine Außenfläche (32), die dazu vorgesehen ist, zur Wärmequelle hin angeordnet zu werden, **dadurch gekennzeichnet, dass** mindestens eine aus der Innen- (31) und Außenfläche (32) mit einer dekorativen und/oder Schutzbeschichtung (2) beschichtet ist, die so ist wie nach einem der Ansprüche 1 bis 7 definiert.

9. Artikel (1) nach Anspruch 8, **dadurch gekennzeichnet, dass** die Außenfläche (32) mit der dekorativen und/oder Schutzbeschichtung (2) beschichtet ist.

10. Artikel (1) nach Anspruch 8 oder 9, **dadurch gekennzeichnet, dass** der Träger (3) aus einem Material ist, ausgewählt aus Metallen, Glas, Keramiken und Kunststoffen.

11. Kochartikel (1) nach Anspruch 10, **dadurch gekennzeichnet, dass** der Träger (3) ein einschichtiger Träger aus Aluminium oder aus Aluminiumlegierung, aus Aluminiumguss, aus Edelstahl, aus Stahlguss oder aus Kupfer, oder ein mehrschichtiger Träger ist, der von der Außenseite zur Innenseite hin die folgenden Schichten umfasst: ferritischer Edelstahl/Aluminium/austenitischer Edelstahl, oder auch Edelstahl/Aluminium/Kupfer/Aluminium/austenitischer Edelstahl, oder auch eine Kalotte aus Gussaluminium, aus Aluminium oder aus Aluminiumlegierungen, die mit einem Außenboden aus Edelstahl aufgedoppelt ist.

12. Verfahren zum Aufbringen von mindestens einer Beschichtung, so wie nach einem der Ansprüche 1 bis 7 definiert, auf eine der Flächen eines Trägers, **dadurch gekennzeichnet, dass** es die folgenden Schritte umfasst:
a) einen Schritt des Bereitstellens eines Trägers (3), der mindestens zwei gegenüberliegende Flächen (31, 32) aufweist;
b) einen Schritt des Zubereitens einer wässrigen Zusammensetzung, die mindestens einen Sol-Gel-Vorläufer vom Typ metallisches Alkoxid umfasst;
c) einen Schritt des Hydrolysierens des Sol-Gel-Vorläufers durch Einbringen von Wasser und eines sauren oder basischen Katalysators, gefolgt von einer Kondensationsreaktion, die die Bildung eines Alkohols bewirkt, um eine Sol-Gel-Zusammensetzung zu erhalten;
d) einen Schritt des Zugebens von mindestens einem leichtsiedenden organischen Lösungsmittel als Verdünnungsmittel und von mindestens einem hochsiedenden organischen Lösungsmittel als Benetzungsmittel zu der Sol-Gel-Zusammensetzung, um eine modifizierte Sol-Gel-Zusammensetzung zu erhalten;
e) einen Schritt des Zugebens von mindestens einem fluorierten Füllstoff in Form von Fluorkohlenstoffharz-Teilchen, die mit einem Polyethylenwachs oder einem fluorierten Polyether überzogen sind, zu der modifizierten Sol-Gel-Zusammensetzung, um eine modifizierte und fluorierte Sol-Gel-Zusammensetzung zu erhalten;
f) Aufbringen von mindestens einer Schicht der modifizierten und fluorierten Sol-Gel-Zusammensetzung auf eine der Flächen (31, 32) des Trägers (3); und anschließend
g) Brennen der Schicht bei einer Temperatur im Bereich zwischen 200 °C und 420 °C.

13. Verfahren nach Anspruch 12, **dadurch gekennzeichnet, dass** der Schritt e) des Zugebens des fluorierten Füllstoffs durch Vermahlen oder durch Dispergieren ausgeführt wird.

14. Verfahren nach Anspruch 12 oder 13, **dadurch gekennzeichnet, dass** das Aufbringen der modifizierten und fluorierten Sol-Gel-Zusammensetzung durch Zerstäuben ausgeführt wird.

15. Verfahren nach einem der Ansprüche 12 bis 14, **dadurch gekennzeichnet, dass** es weiter einen Schritt des Zugebens von mindestens einem pigmentären Füllstoff umfasst, der gleichzeitig mit der Zugabe des fluorierten Füllstoffs ausgeführt wird.

16. Verfahren nach einem der Ansprüche 12 bis 15, **dadurch gekennzeichnet, dass** der Träger (3) die endgültige Form des Kochartikels aufweist, umfassend eine Innenfläche (31), die in der Lage ist, Lebensmittel aufzunehmen, und eine Außenfläche (32), die dazu vorgesehen ist, auf Seiten einer Wärmequelle angeordnet zu werden.

## Claims

1. Sol-gel coating (2) having the form of a continuous film of a material comprising a matrix formed using at least one metal polyalcoxylate, **characterised in that** it comprises at least one fluorinated filler in the form of particles of fluorocarbon resin coated with a polyethylene wax or a fluorinated polyether.

2. Coating (2) according to claim 1, **characterised in that** the fluorocarbon resin is polytetrafluoroethylene (PTFE).

3. Coating (2) according to claim 1 or 2, **characterised in that** the metal polyalcoxylate is a polyalkoxysilane.

4. Coating (2) according to any of claims 1 to 3, **characterised in that** the sol-gel material further comprises at least one pigmentary and/or reinforcing filler.

5. Coating (2) according to claim 4, **characterised in that** said pigmentary and/or reinforcing filler has a micrometric or submicronic size.

6. Coating (2) according to claim 4 or 5, **characterised in that** the pigmentary filler is chosen from mica coated or not, titanium dioxide, mixed oxides of copper-chromium-manganese (spinels), aluminosilicates, iron oxides, carbon black, pyralene red, metallic flakes, interference pigments, thermochromic pigments, magnetic or magnetisable pigments.

7. Coating (2) according to claim 4 or 5, **characterised in that** the reinforcing filler or fillers are chosen from alumina, zirconia, and silica.

8. Culinary article (1) comprising a support (3) having an inner face (31) that can receive food and an outer face (32) intended to be arranged towards the source of heat, **characterised in that** at least one of said inner (31) and outer (32) faces is coated with a decorative and/or protective coating (2) which is such as defined according to any of claims 1 to 7.

9. Article (1) according to claim 8, **characterised in that** said outer face (32) is coated with said decorative and/or protective coating (2).

10. Article (1) according to claim 8 or 9, **characterised in that** the support (3) is made from a material chosen from metals, glass, ceramics and plastic materials.

11. Culinary article (1) according to claim 10, **characterised in that** the support (3) is a single-layer support made from aluminium or aluminium alloy, from cast aluminium, from stainless steel, from cast steel or from copper, or a multi-layer support comprising from the outside to the inside the following layers ferritic stainless steel/aluminium/austenitic stainless steel or stainless steel/aluminium/copper/aluminium/austenitic stainless steel, or dome of cast aluminium, of aluminium or of aluminium alloys doubled by an outer bottom made from stainless steel.

12. Method for applying on one of the faces of a support at least one coating such as defined according to any of claims 1 to 7, **characterised in that** it comprises the following steps:
a) a step of supplying a support (3) having at least two opposite faces (31, 32);
b) a step of preparing an aqueous composition comprising at least one sol-gel precursor of the metal alkoxide type;
c) a step of hydrolysing said sol-gel precursor by the introduction of water and of an acid or base catalyst, followed by a condensation reaction generating the formation of an alcohol in order to obtain a sol-gel composition;
d) a step of adding to said sol-gel composition at least one light organic solvent as a diluent and at least one heavy organic solvent as a wetting agent, in order to obtain a modified sol-gel composition;
e) a step of adding to said modified sol-gel composition at least one fluorinated filler in the form of particles of fluorocarbon resin coated with a polyethylene wax or with a fluorinated polyether, in order to obtain a modified and fluorinated sol-gel composition;
f) application on one of the faces (31, 32) of the support (3) of at least one layer of the modified and fluorinated sol-gel composition; then
g) baking of said layer at a temperature between 200°C and 420°C.

13. Method according to claim 12, **characterised in that** the step e) of adding fluorinated filler is carried out by crushing or by dispersion.

14. Method according to claim 12 or 13, **characterised in that** the application of the modified and fluorinated sol-gel composition is carried out by spraying.

15. Method according to any of claims 12 to 14, **characterised in that** it further comprises a step of adding at least one pigmentary filler which is carried out simultaneously to the adding of said fluorinated filler.

16. Method according to any of claims 12 to 15, **characterised in that** the support (3) has the final form of the culinary article, comprising an inner face (31) able to receive food and an outer face (32) intended to be arranged on the side of a source of heat.
